(19) Europäisches Patentamt
European Patent Office
Office européen des brevets

(11) Veröffentlichungsnummer: **0 181 585**
**B1**

(12) # EUROPÄISCHE PATENTSCHRIFT

(45) Veröffentlichungstag der Patentschrift: **04.10.89**

(51) Int. Cl.⁴: **C 09 B 62/51,** D 06 P 1/384

(21) Anmeldenummer: **85113962.6**

(22) Anmeldetag: **02.11.85**

(54) **Faserreaktive Monoazoverbindungen, Verfahren zu ihrer Herstellung und ihre Verwendung als Farbstoffe.**

(30) Priorität: **12.11.84 DE 3441272**

(43) Veröffentlichungstag der Anmeldung: **21.05.86 Patentblatt 86/21**

(45) Bekanntmachung des Hinweises auf die Patenterteilung: **04.10.89 Patentblatt 89/40**

(84) Benannte Vertragsstaaten: **CH DE FR GB IT LI**

(56) Entgegenhaltungen:
**EP-A-0 051 808**
**EP-A-0 107 614**
**FR-A-1 192 412**
**US-A-3 531 459**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt am Main 80 (DE)**

(72) Erfinder: **Springer, Hartmut, Dr., Am Erdbeerstein 27, D-6240 Königstein/Taunus (DE)**
Erfinder: **König, Gerd, Dr., Breckenheimer Strasse 32, D-6238 Hofheim am Taunus (DE)**

**EP 0 181 585 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die Erfindung liegt auf dem technischen Gebiet der faserreaktiven Farbstoffe.

Aus der Europäischen Patentanmeldungs-Veröffentlichung Nr. 0 107 614 sind faserreaktive Azoverbindungen bekannt, die jedoch gewisse Mängel besitzen.

Mit der vorliegenden Erfindung wurden nunmehr neue Monoazoverbindungen mit verbesserten Eigenschaften gefunden, die der allgemeinen Formel (1)

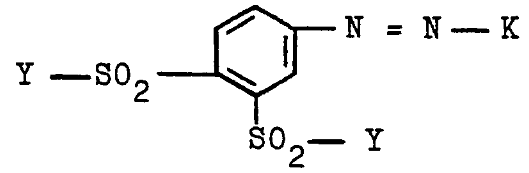

(1)

entsprechen, in welcher K einen Rest der allgemeinen Formel (2) oder (3)

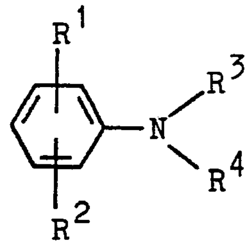

(2)

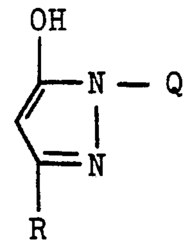

(3)

bedeutet und die übrigen Formelreste folgende Bedeutung besitzen:

Y ist die Vinylgruppe oder eine Gruppe der Formel (4)

$-CH_2-CH_2-X$ (4)

in welcher

X ein durch ein Alkali unter Bildung der Vinylgruppe eliminierbaren Substituenten ist;

$R^1$ ist ein Wasserstoffatom oder eine Alkylgruppe von 1 bis 4 C-Atomen, wie die Ethylgruppe und insbesondere Methylgruppe, eine Alkoxygruppe von 1 bis 4 C-Atomen, wie die Ethoxygruppe und insbesondere die Methoxygruppe, eine Sulfogruppe (entsprechend der allgemeinen Formel $-SO_3M$, in welcher M ein Wasserstoffatom oder ein Alkalimetall, wie Natrium, Kalium und Lithium, oder das Äquivalent eines Erdalkalimetalls, wie des Calciums, ist), eine Carboxygruppe (entsprechend der allgemeinen Formel -COOM mit M der obengenannten Bedeutung) oder ein Halogenatom, wie ein Bromatom und insbesondere ein Chloratom;

$R^2$ ist ein Wasserstoffatom, eine Alkylgruppe von 1 bis 4 C-Atomen, wie die Ethylgruppe und insbesondere die Methylgruppe, eine Alkoxygruppe von 1 bis 4 C-Atomen, wie die Ethoxygruppe und insbesondere die Methoxygruppe, ein Halogenatom, wie ein Bromatom und insbesondere ein Chloratom, die Cyangruppe, die Trifluormethylgruppe, eine Alkanoylaminogruppe von 2 bis 5 C-Atomen, wie die Acetylamino- und Propionylaminogruppe, oder eine Alkylsulfonylaminogruppe von 1 bis 4 C-Atomen, wie beispielsweise die Methylsulfonylamino- und Ethylsulfonylamino-Gruppe, oder

$R^2$ ist die Sulfamoylgruppe, die am Stickstoffatom durch 1 oder 2 Substituenten aus der Gruppe Alkyl von 1 bis 4 C-Atomen (wie Methyl, Ethyl, Propyl, Isopropyl und Butyl), substituiertes Alkyl von 1 bis 4 C-Atomen [wie durch 1 oder 2, vorzugsweise einen Substituenten aus der Gruppe Hydroxy, Sulfato, Sulfo, Carboxy, Chlor, Alkoxy von 1 bis 4 C-Atomen, Phenyl und substituiertes Phenyl (wie durch Substituenten aus der Gruppe Chlor, Sulfo, Alkyl von 1 bis 4 C-Atomen, Alkoxy von 1 bis 4 C-Atomen und Carboxy substituiertes Phenyl) substituiertes Alkyl von 1 bis 4 C-Atomen, wie β-Sulfatoethyl, β-Sulfoethyl, β-Hydroxyethyl, Phenethyl und Benzyl], Cycloalkyl (wie Cyclohexyl), Phenyl und substituiertes Phenyl (wie durch Substituenten aus der Gruppe Chlor, Sulfo, Alkyl von 1 bis 4 C-Atomen, Alkoxy von 1 bis 4 C-Atomen und Carboxy substituiertes Phenyl) mono- oder disubstituiert sein kann, oder

R2 ist die Ureidogruppe oder eine Ureidogruppe, die am endständigen Stickstoffatom durch 1 oder 2 Substituenten aus der Gruppe Alkyl von 1 bis 4 C-Atomen (wie Methyl, Ethyl, Propyl, Isopropyl und Butyl), substituiertes Alkyl von 1 bis 4 C-Atomen [wie durch 1 oder 2, vorzugsweise einen Substituenten aus der Gruppe Hydroxy, Sulfato, Sulfo, Carboxy, Chlor, Alkoxy von 1 bis 4 C-Atomen, Phenyl und substituiertes Phenyl (wie durch Substituenten aus der Gruppe Chlor, Sulfo, Alkyl von 1 bis 4 C-Atomen, Alkoxy von 1 bis 4 C-Atomen und Carboxy substituiertes Phenyl) substituiertes Alkyl von 1 bis 4 C-Atomen, wie β-Sulfatoethyl, β-Sulfoethyl, β-Hydroxy-ethyl, Phenethyl und Benzyl], Cycloalkyl (wie Cyclohexyl), Phenyl und substituiertes Phenyl (wie durch Substituenten aus der Gruppe Chlor, Sulfo, Alkyl von 1 bis 4 C-Atomen, Alkoxy von 1 bis 4 C-Atomen und Carboxy substituiertes Phenyl) mono- oder disubstituiert sein kann, wie beispielsweise die N-Phenylureidogruppe;

$R^3$ ist ein Wasserstoffatom oder eine Alkylgruppe von 1 bis 6 C-Atomen, bevorzugt von 1 bis 4 C-Atomen, die

durch einen oder zwei Substituenten substituiert sein kann, wobei die Substituenten aus der Gruppe Alkoxy von 1 bis 4 C-Atomen, Halogen, wie Chlor, Cyan, Hydroxy, Carboxy, Sulfo, Sulfato (entsprechend der allgemeinen Formel $-OSO_3M$ mit M der oben angegebenen Bedeutung), Phosphato (entsprechend der allgemeinen Formel $-OPO_3M_2$ mit M der oben angegebenen Bedeutung), Carbamoyl, Sulfamoyl, N-($C_1$-$C_4$-Alkyl)-carbamoyl mit einer Sulfato-, Phosphato-, Hydroxy- oder Sulfogruppe als Substituent im Alkylrest, N-($C_1$-$C_4$-Alkyl)-sulfamoyl mit einer Sulfato-, Phosphato-, Hydroxy- oder Sulfogruppe als Substituent im Alkylrest, N,N-Di-($C_1$-$C_4$-Alkyl)-sulfamoyl mit einer Sulfato-, Phosphato-, Hydroxy- oder Sulfogruppe als Substituent in einer oder beiden Alkylresten und N,N-Di-($C_1$-$C_4$-Alkyl)-carbamoyl mit einer Sulfato-, Phosphato-, Hydroxy- oder Sulfogruppe als Substituent in einer oder beiden Alkylresten ausgewählt sind, oder

$R^3$ ist eine Alkenylgruppe von 2 bis 5 C-Atomen, wie die Vinyl- und Propenylgruppe;

$R^4$ ist eine Alkylgruppe von 1 bis 6 C-Atomen, bevorzugt von 1 bis 4 C-Atomen, die durch einen oder zwei Substituenten substituiert sein kann, wobei die Substituenten aus der Gruppe Alkoxy von 1 bis 4 C-Atomen, Halogen, wie Chlor, Cyan, Hydroxy, Carboxy, Sulfo, Sulfato, Phosphato, Carbamoyl, Sulfamoyl, N-($C_1$-$C_4$-Alkyl)-carbamoyl mit einer Sulfato-, Phosphato-, Hydroxy- oder Sulfogruppe als Substituent im Alkylrest, N-($C_1$-$C_4$-Alkyl)-sulfamoyl mit einer Sulfato-, Phosphato-, Hydroxy- oder Sulfogruppe als Substituent im Alkylrest, N,N-Di-($C_1$-$C_4$-Alkyl)-sulfamoyl mit einer Sulfato-, Phosphato-, Hydroxy- oder Sulfogruppe als Substituent in einer oder beiden Alkylresten und N,N-Di-($C_1$-$C_4$-Alkyl)-carbamoyl mit einer Sulfato-, Phosphato-, Hydroxy- oder Sulfogruppe als Substituent in einer oder beiden Alkylresten ausgewählt sind, oder ist eine Alkenylgruppe von 2 bis 4 C-Atomen, wie die Propen(2)-1-yl-Gruppe;

R ist die Methylgruppe, eine Carboxygruppe, eine Carbalkoxygruppe von 2 bis 5 C-Atomen, wie die Carbomethoxy- und Carbethoxygruppe, die Carbamoylgruppe oder ein gegebenenfalls durch Sulfo, Carboxy, Methyl, Ethyl, Methoxy, Ethoxy und/oder Chlor substituierter Phenylrest;

Q ist der Phenylrest, der substituiert sein kann, wie bspw. durch 1, 2 oder 3 Substituenten, die aus der Gruppe 2 Sulfo, 2 Carboxy, 3 Alkyl von 1 bis 4 C-Atomen, wie Ethyl und insbesondere Methyl, 2 Alkoxy von 1 bis 4 C-Atomen, wie Ethoxy und insbesondere Methoxy, 2 Chlor, 1 Brom, 1 Nitro, 1 Amino, 1 Alkanoylamino von 2 bis 5 C-Atomen, wie Acetylamino, 1 Benzoylamino, das gegebenenfalls durch Sulfo, Carboxy und/oder Chlor substituiert sein kann, Carbamoyl und Sulfamoyl ausgewählt sind, oder ist ein Naphthylrest, der durch 1, 2 oder 3 Sulfogruppen und gegebenenfalls durch eine Alkylgruppe von 1 bis 4 C-Atomen, wie die Methylgruppe, eine Alkoxygruppe von 1 bis 4 C-Atomen, wie die Methoxygruppe, ein Chloratom oder eine Alkanoylaminogruppe von 2 bis 5 C-Atomen, wie die Acetylaminogruppe, substituiert sein kann.

Die neuen Verbindungen der Formel (1) können in saurer Form vorliegen. Bevorzugt sind sie in Form ihrer Salze, insbesondere der oben genannten Alkali- und Erdalkalimetallsalze. Sie finden, bevorzugt in Form der Alkalimetallsalze, Verwendung zum Färben (im allgemeinen Sinne einschließlich des Bedruckens) von hydroxygruppenhaltigen und/oder carbonamidgruppenhaltigen Materialien, insbesondere Fasermaterialien.

Die Alkyl-, Alkenyl- und Alkylenreste, die für die obigen Formelglieder genannt sind, können geradkettig oder verzweigt sein.

Aminogruppen entsprechend der allgemeinen Formel $-NR^3R^4$ sind beispielsweise die Methylamino-, Ethylamino-, Propylamino-, Isopropylamino-, Butylamino-, Hexylamino-, β-Methoxyethylamino-, γ-Methoxypropylamino-, β-Ethoxyethylamino-, N,N-Dimethylamino-, N,N-Diethylamino-, β-Chlorethylamino-, β-Cyanethylamino-, γ-Cyan-propylamino-, β-Carboxyethylamino-, Sulfomethylamino-, β-Sulfoethyl-amino-, β-Hydroxyethyl-amino-, β-Sulfatoethyl-amino-, N,N-Di-(β-hydroxyethyl)-amino-, N,N-Di-(β-sulfatoethyl)-amino, N,N-Di-(β-Sulfoethyl)-amino-, γ-Sulfato-n-propylamino-, β,γ-Disulfato-n-propyl-amino-, N-(β-Sulfatoethyl)-N-(γ-sulfato-n-propyl)-amino-, N-(β-sulfatoethyl)-N-(α,γ-disulfato-n-propyl)-amino-, N-[β-(N-β-Sulfatoethyl-carbamoyl)-ethyl]-amino-, N-[β-(N-Methyl-N-β-sulfatoethyl-carbamoyl)-ethyl]-amino-, N-[β-(N,N-Di-β-sulfatoethyl-carbamoyl)-ethyl]-amino-, N-(β-Sulfatoethyl)-N-[β-(N-β-sulfatoethyl-carbamoyl)-ethyl]-amino-, N-(β-Sulfatoethyl)-N-[β-(N-methyl-N-β-sulfatoethylcarbamoyl)-ethyl]-amino-, N-(β-Sulfatoethyl)-N-[β-(N,N-di-β-sulfatoethyl-carbamoyl)-ethyl]-amino-, β-Sulfato-n-propyl-amino-, N-(β-Sulfatoethyl)-N-(β-sulfato-n-propyl)-amino- und die γ-Hydroxypropylamino-Gruppe.

Der für X in Formel (4) stehende alkalisch eliminierbare Substituent ist beispielsweise eine Sulfatogruppe, eine Thiosulfatogruppe (entsprechend der allgemeinen Formel $-S-SO_3M$ mit M der oben angegebenen Bedeutung), eine Phosphatogruppe, eine Alkanoyloxygruppe von 2 bis 5 C-Atomen, wie die Acetyloxygruppe, die Benzoyloxygruppe, die N,N-Di-methyl- oder N,N-Diethyl-thiocarbo-sulfid-Gruppe, die Dimethylamino- oder Diethylaminogruppe, eine Trialkylammonium-halogenid-, wie Trimethylammonium-chlorid-Gruppe, das Chlor-, Brom- oder Fluoratom, eine Pyridinium-halogenid-, wie Pyridinium-chlorid-Gruppe, eine Trialkylammoniummethosulfat-, wie Trimethylammonium-methosulfat-Gruppe, eine Pyrimidinium-halogenid-Gruppe, die Dimethyl- oder Diethylammonium-chlorid-Gruppe, die p-Tosyloxy-, Dimethylamino-sulfonyloxy-, N-Methyl-methylsulfonamid-, Methylsulfonyloxy-, Sulfophenyl-sulfonyloxy-, Phenylsulfonyloxy-, die Thiocyanato-, Trichloracetyloxy-, Dichloracetyloxy-, Monochloracetyloxy-, Dimethylamino-sulfonyloxy- und Diethylamino-sulfonyloxy-Gruppe.

Bevorzugt steht Y für die Vinylgruppe und insbesondere für eine β-Sulfatoethyl-Gruppe. Die beiden Reste Y können zueinander gleich oder voneinander verschieden sein; bevorzugt sind sie zueinander gleich.

Bevorzugt ist in den Verbindungen der Formel (1) $R^1$ ein Wasserstoffatom, eine Alkylgruppe von 1 bis 4 C-Atomen, eine Alkoxygruppe von 1 bis 4 C-Atomen, eine Sulfogruppe, eine Carboxygruppe oder ein Chloratom. Insbesondere bevorzugt ist $R^1$ ein Wasserstoffatom, eine Methoxy-, Ethoxy-, Methyl- oder Sulfogruppe oder

ein Chloratom, und ganz besonders bevorzugt ist $R^1$ ein Wasserstoffatom, die Methoxygruppe oder ein Chloratom.

Bevorzugt ist in den Verbindungen der Formel (1) $R^2$ ein Wasserstoffatom, eine Methyl-, Ethyl-, Methoxy- oder Ethoxygruppe oder ein Chloratom, eine Alkanoylaminogruppe von 2 bis 5 C-Atomen, wie insbesondere die Acetylaminogruppe, die Methylsulfonylamino-, Trifluormethyl-, Cyano-, N,N-Diethyl-sulfamoyl-, N,N-Di-n-Butylsulfamoyl-, N-Methyl-N-(β-sulfatoethyl)-sulfamoyl-, N-(β-Sulfoethyl)-sulfamoyl-, N-Phenyl-sulfamoyl-, Ureido- oder N-Phenylureido-Gruppe. Besonders bevorzugt ist $R^2$ eine Methyl-, Ethyl-, Methoxy- oder Ethoxygruppe, insbesondere ein Wasserstoffatom, ein Chloratom, eine Alkanoylaminogruppe von 2 bis 5 C-Atomen, wie insbesondere die Acetylaminogruppe, die Methylsulfonylamino-, Trifluormethyl-, Cyano-, N,N-Diethyl-sulfamoyl-, N-Methyl-N-(β-sulfatoethyl)-sulfamoyl-, N-(β-Sulfoethyl)-sulfamoyl-, Ureido- oder N-Phenylureido-Gruppe. Ganz besonders bevorzugt ist $R^2$ ein Chloratom, die Acetylamino-, die Trifluormethyl-, die Ureido- und die N-Phenylureido-Gruppe.

Bevorzugt sind weiterhin solche Verbindungen, in denen $R^3$ ein Wasserstoffatom oder eine Alkylgruppe von 1 bis 4 C-Atomen, insbesondere die Ethylgruppe bedeutet, die durch eine Sulfo-, Carboxy-, Cyano-, Sulfato- oder Phosphatogruppe substituiert sein kann, oder eine Alkenylgruppe von 2 bis 4 C-Atomen, wie die Propen(2)-1-yl-Gruppe. Besonders bevorzugt steht R für ein Wasserstoffatom oder eine Alkylgruppe von 1 bis 4 C-Atomen, die durch eine Sulfo-, Carboxy-, Hydroxy-, Cyano- oder Sulfatogruppe substituiert sein kann, ganz besonders bevorzugt ein Wasserstoffatom, die β-Hydroxyethyl-, β-Sulfatoethyl-, β-Cyanoethyl- oder Ethylgruppe ist.

Bevorzugt ist weiterhin in den Verbindungen der Formel (1) $R^4$ eine Alkylgruppe von 1 bis 4 C-Atomen, insbesondere die Ethylgruppe, die durch Hydroxy-, Cyano-, Sulfo-, Carboxy-, Sulfato- und Phosphatogruppen substituiert sein kann, bevorzugt eine dieser Gruppen substituiert ist, oder eine Alkenylgruppe von 2 bis 4 C-Atomen, wie die Propen(2)-1-yl-Gruppe, oder eine Alkylgruppe von 1 bis 4 C-Atomen, insbesondere die Ethylgruppe, die durch eine N-(β-Sulfatoethyl)-carbamoyl-, N-Methyl-N-(β-sulfatoethyl)-carbamoyl- oder N,N-Di-(β-sulfatoethyl)-carbamoyl-Gruppe substituiert ist. Besonders bevorzugt bedeutet $R^4$ eine Alkylgruppe von 1 bis 4 C-Atomen, insbesondere hiervon die Ethylgruppe, oder β-(N-β-Sulfatoethyl-carbamoyl)-ethyl-, β-(N-Methyl-N-β-sulfatoethyl-carbamoyl)-ethyl- oder β-[N,N-Di-(β-sulfatoethyl)-carbamoyl]-ethyl-Gruppe oder eine Propenyl-Gruppe oder eine Alkylgruppe von 1 bis 4 C-Atomen, wie die Ethylgruppe, die durch 1 oder 2 Substituenten, bevorzugt einen Substituenten, aus der Gruppe Sulfo, Sulfato und Hydroxy substituiert ist, wie die γ-Sulfatopropyl-, β,γ-Disulfatopropyl-, β-Sulfoethyl-, α-Sulfoethyl-, β-Sulfopropyl- und β-Sulfopropyl-Gruppe. Ganz besonders bevorzugt ist hiervon $R^4$ eine Alkylgruppe von 1 bis 4 C-Atomen, die durch eine Hydroxy-, Sulfo- oder Sulfatogruppe substituiert sein kann.

Ebenso sind diejenigen Verbindungen bevorzugt, in welchen R für die Methyl- oder Carboxygruppe oder die Carbomethoxy- oder Carbethoxygruppe steht, und ebenso diejenigen erfindungsgemäßen Verbindungen, in denen Q für die Phenylgruppe steht, die durch 1 oder 2 Substituenten aus der Gruppe Sulfo, Carboxy, Methyl, Ethyl, Methoxy, Ethoxy und Chlor substituiert ist, wobei bevorzugt eine der Substituenten eine Sulfogruppe ist, oder in welchen Q für einen Naphthylrest steht, der durch 1, 2 oder 3 Sulfogruppen substituiert ist.

Verbindungen der allgemeinen Formel (1), die den Anilinorest entsprechend der allgemeinen Formel (2) enthalten, sind ein bevorzugter Gegenstand der vorliegenden Erfindung. Hiervon sind insbesondere diejenigen Azoverbindungen bevorzugt, die der allgemeinen Formel (5)

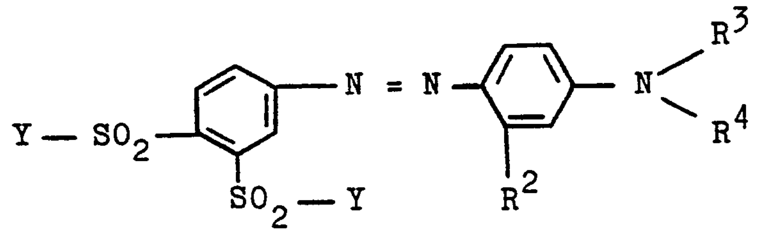

(5)

entsprechen, in welchen Y, $R^2$, $R^3$ und $R^4$ die obengenannten, insbesondere bevorzugten Bedeutungen besitzen. Insbesondere bevorzugt sind diejenigen Verbindungen der allgemeinen Formel (5), in welcher $R^2$ für ein Chloratom oder für die Trifluormethylgruppe steht und $R^3$ und $R^4$ beide eine β-Sulfatoethyl-Gruppe darstellen.

Die vorliegende Erfindung betrifft weiterhin ein Verfahren zur Herstellung der erfindungsgemäßen Verbindungen der allgemeinen Formel (1); es ist dadurch gekennzeichnet, daß man eine Verbindung der allgemeinen Formel (6)

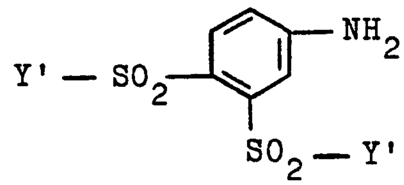

(6)

in welcher Y' eine der für Y genannten Bedeutungen besitzt oder die β-Hydroxyethyl-Gruppe bedeutet, gemäß üblichen Verfahrensweisen diazotiert und mit einer Kupplungskomponente der Formel (7)

H - K (7)

in welcher K eine der obengenannten Bedeutungen besitzt, kuppelt und im Falle, daß von einer Diazokomponente der Formel (6) ausgegangen wird, in welcher Y' für die β-Hydroxyethyl-Gruppe steht, die gebildete Azoverbindung der allgemeinen Formel (8)

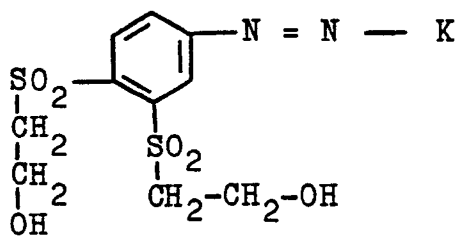

(8)

in welchen K die obengenannte Bedeutungen hat, analog bekannten Verfahrensweisen mit einem Acylierungs- oder Veresterungsmittel umsetzt, um sie in erfindungsgemäße Azoverbindungen der allgemeinen Formel (1) überzuführen, in welchen X für einen alkalisch eliminierbaren Acyloxyrest, wie den Sulfato-, Phosphato-, Alkanoyloxy-, Benzoyloxy-, Alkylsulfonyloxy- oder Phenylsulfonyloxy-Rest, steht.

Erfindungsgemäße Azoverbindungen, die im Rest K der Kupplungskomponente H-K eine (oder mehrere) Sulfato- oder Phosphatogruppen an eine aliphatische Gruppe gebunden enthalten, können auch in erfindungsgemäßer Weise hergestellt werden, indem man eine erfindungsgemäße Azoverbindung, die eine (oder mehrere) Hydroxygruppe an eine (oder mehrere) aliphatische Gruppe gebunden enthalten, analog bekannten Verfahrensweisen mit einem Sulfatierungs- bzw. Phosphatierungsmittel umsetzt. Hierbei kann man auch von solchen Azoverbindungen ausgehen, die in der Diazokomponente die β-Hydroxyethylsulfonyl-Gruppen enthalten, und gleichzeitig sowohl die Hydroxygruppen in der Kupplungskomponente als auch die Hydroxygruppen in der Diazokomponente in die entsprechenden Sulfato- bzw. Phosphatogruppen mit Hilfe des Sulfatierungsmittels bzw. Phosphatierungsmittels umsetzen.

Sulfatierungsmittel sind bekannt; sie sind bspw. konzentrierte Schwefelsäure und Schwefelsäuremonohydrat. Vorzugsweise erfolgt die Sulfatierung mittels konzentrierter Schwefelsäure bei einer Temperatur zwischen 0 und 40°C oder mittels Schwefelsäuremonohydrat bei einer Temperatur zwischen 5 und 15°C.

Phosphatierungsmittel sind ebenfalls bekannt; sie sind Phosphorsäure, Polyphosphorsäure oder Gemische dieser Säuren mit Phosphorpentoxid. Die Phosphatierungsreaktion mit diesen Agentien erfolgt in der Regel zwischen 20 und 80°C.

Erfindungsgemäße Azoverbindungen, die eine Alkanoyloxygruppe an einen aliphatischen Rest gebunden enthalten, wie beispielsweise in den Resten der Formeln $R^2$, $R^3$, $R^4$ und R und/oder Y, können in gleicher Weise durch Umsetzung einer entsprechenden Azo-Ausgangsverbindung, in welchen in der Diazo- und/oder Kupplungskomponente eine oder mehrere an einen aliphatischen Rest gebundene Hydroxygruppen enthalten sind, mit einem Acylierungsmittel einer Alkancarbonsäure oder aromatischen Carbonsäure, wie beispielsweise Acetylchlorid, Eisessig, Acetanhydrid, Benzoylchlorid, hergestellt werden.

Ebenfalls können erfindungsgemäße Azoverbindungen, die im Rest K der Kupplungskomponente H-K eine Monoalkyl- oder Dialkylaminogruppe enthalten, analog bekannten Verfahrensweisen durch Alkylierung einer entsprechenden Azo- Ausgangsverbindung, die eine primäre Aminogruppe bzw. eine Monoalkylaminogruppe gebunden enthält, mittels eines üblichen Alkylierungsmittels synthetisiert werden.

Sofern erwünscht, können erfindungsgemäße Azoverbindungen, die eine bestimmte faserreaktive Gruppe der Formel $-SO_2-Y$ mit Y der anfangs für Formel (1) angegebenen Bedeutung haben, in erfindungsgemäße Azoverbindungen mit einer anderen faserreaktiven Gruppe Y übergeführt werden, wie beispielsweise die Überführung von erfindungsgemäßen Azoverbindungen mit den β-Sulfatoethylsulfonyl-Gruppen in solche mit Vinylsulfonyl-Gruppen oder in β-Thiosulfatoethylsulfonyl- oder Dialkylaminoethylsulfonyl-Gruppen. Die für diese Umsetzungen angewandten Reaktionsbedingungen sind analog den zahlreich in der Literatur beschriebenen Bedingungen für die gegenseitige Überführung der Reaktivgruppen der Vinylsulfon-Reihe.

Kupplungskomponenten entsprechend der allgemeinen Formel (7), die erfindungsgemäß zur Herstellung der

neuen Azoverbindungen der allgemeinen Formel (1) eingesetzt werden können, sind beispielsweise:

N-Ethyl-N-(β-hydroxyethyl)-anilin, N-Ethyl-N-(β-acetoxyethyl)-anilin, 3-Acetylamino-N,N-di-(β-hydroxyethyl)-anilin, 3-Methyl-N,N-di-(β-acetoxyethyl)-anilin, 3-Ureido-anilin, 3-Methyl-N-ethyl-N-(β-sulfoethyl)-anilin, 3-Methyl-N,N-di-(β-hydroxyethyl)-anilin, 3-Methyl-6-methoxy-N,N-di-(β-hydroxyethyl)-anilin, 3-Acetylamino-anilin, 3-Methyl-N-ethyl-N-(β-hydroxyethyl)-anilin, 1-(3'-Chlorphenyl)-3-methyl-pyrazolon-5, 1-(2'-Chlor-6'-methylphenyl)-3-methyl-pyrazolon-5, 1-Phenyl-3-methyl-pyrazolon-5, 1-(2'-Sulfophenyl)-3-methyl-pyrazol-5-on, 1-(3'-Sulfophenyl)-3-methyl-pyrazol-5-on, 1-(4'-Sulfophenyl)-3-methyl-pyrazol-5-on, 1-(2',4'-Disulfophenyl)-3-methyl-pyrazolon-5-on, 1-(3',5'-Disulfophenyl)-3-methyl-pyrazol-5-on, 1-(2',5'-Disulfophenyl)-3-methyl-pyrazol-5-on, 1-(2'-Chlor-4'-sulfophenyl)-3-methyl-pyrazol-5-on, 1-(2'-Chlor-5'-sulfophenyl)-3-methyl-pyrazol-5-on, 1-(2',5'-Dichlor-4'-sulfophenyl)-3-methyl-pyrazol-5-on, 1-(2'-Methyl-4'-sulfophenyl)-3-methyl-pyrazol-5-on, 1-(2'-Methyl-2'-sulfophenyl)-3-methyl-pyrazol-5-on, 1-(2'-Methyl-3'-chlor-4'-sulfophenyl)-3-methyl-pyrazol-5-on, 1-(2'-6'-methyl-4'-sulfophenyl)-3-methyl-pyrazol-5-on, 1-(3'-Carboxyphenyl)-3-methyl-pyrazol-5-on, 1-(3'-Sulfamoylphenyl)-3-methyl-pyrazol-5-on, 1-(4'-Sulfamoylphenyl)-3-methyl-pyrazol-5-on, 1-(6'-Sulfo-naphth-2'-yl)-3-methyl-pyrazol-5-on, 1-(4',8'-Disulfo-naphth-2'-yl)-3-methyl-pyrazol-5-on, 1-(5',7'-Disulfo-naphth-2'-yl)-3-methyl-pyrazol-5-on, 1-(3',6',8'-Trisulfo-naphth-2'-yl)-3-methyl-pyrazol-5-on, 1-(4',6',8'-Trisulfo-naphth-2'-yl)-3-methyl-pyrazol-5-on, 1-(6'-Sulfo-naphth-1'-yl)-3-methyl-pyrazol-5-on, 1-(7'-Sulfo-naphth-1'-yl)-3-methyl-pyrazol-5-on.

Die Diazotierungsreaktion der Ausgangs-Anilinverbindungen der allgemeinen Formel (6) erfolgt in der Regel, analog bekannten Verfahrensweisen, durch Einwirkung salpetriger Säure in wäßrig-mineralischer Lösung bei Temperaturen unterhalb von 15°C. Die Kupplung dieser Diazoniumsalze mit den Kupplungskomponenten der allgemeinen Formel (7) wird im stark sauren bis neutralen pH-Bereich durchgeführt, analog den bekannten Reaktionsweisen abhängig von der Art der Kupplungskomponente. So erfolgt die Kupplung mit Kupplungskomponenten, in denen K für einen Rest der Formel (2) steht, in der Regel bei einem pH-Wert zwischen 1 und 3 und bei Kupplungskomponenten, in welchen K für einen Rest der Formel (3) steht, in der Regel bei pH-Werden zwischen 3 und 7, wobei bei einem Kupplungsbereich in der Nähe des pH-Wertes 7 darauf geachtet werden muß, daß der pH-Wert von 7 nicht überschritten werden sollte, um eine Schädigung der faserreaktiven Gruppe zu vermeiden, - wobei allerdings bei Einsatz solcher Diazokomponenten, die die β-Hydroxyethylsulfonyl-Gruppen enthalten, die Kupplung auch im alkalischen Bereich erfolgen kann. Die Kupplungstemperatur liegt in der Regel zwischen 10 und 40°C.

Die Abscheidung und Isolierung der erfindungsgemäß hergestellten Verbindungen der allgemeinen Formel (1) aus den Syntheselösungen kann nach allgemein bekannten Methoden erfolgen, so beispielsweise entweder durch Ausfällen aus dem Reaktionsmedium mittels Elektrolyten, wie beispielsweise Natriumchlorid oder Kaliumchlorid, oder durch Eindampfen der Reaktionslösung, beispielsweise Sprühtrocknung, wobei dieser Reaktionslösung eine Puffersubstanz zugefügt werden kann.

Die erfindungsgemäßen Verbindungen der allgemeinen Formel (1) haben faserreaktive Eigenschaften und besitzen sehr gute Farbstoffeigenschaften. Sie können deshalb zum Färben (einschließlich Bedrucken) von hydroxygruppenhaltigen und/oder carbonamidgruppenhaltigen Materialien verwendet werden. Auch können die bei der Synthese der erfindungsgemäßen Verbindungen anfallenden Lösungen, gegebenenfalls nach Zusatz einer Puffersubstanz, gegebenenfalls auch nach Konzentrierung, direkt als Flüssigpräparation der färberischen Verwendung zugeführt werden.

Gegenstand der vorliegenden Erfindung ist deshalb auch die Verwendung der erfindungsgemäßen Verbindungen der allgemeinen Formel (1) zum Färben (einschließlich Bedrucken) von hydroxy- und/oder carbonamidgruppenhaltgen Materialien bzw. Verfahren zu deren Anwendung auf diesen Substraten. Bevorzugt kommen die Materialien in Form von Fasermateialien zur Anwendung, insbesondere in Form on Textilfasern, wie Garnen, Wickelkörpern und Geweben. Hierbei kann man analog bekannten Verfahrensweisen vorgehen.

Hydroxygruppenhaltige Materialien sind solche natürlichen oder synthetischen Ursprungs, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form von Fasern, beispielsweise Wolle und andere Tierhaare, Seide, Leder, Polyamid-6,6, Polyamid-6, Polyamid-11 und Polyamid-4.

Die erfindungsgemäßen Verbindungen der Formel (1) lassen sich, gemäß der erfindungsgemäßen Anwendung, auf den genannten Substraten, insbesondere auf den genannten Fasermaterialien, nach den für wasserlösliche Farbstoffe, insbesondere faserreaktive Farbstoffe, bekannten Anwendungstechniken applizieren und fixieren, so beispielsweise, indem man die Monoazoverbindung der allgemeinen Formel (1) in gelöster Form auf das Substrat aufbringt oder sie darin einbringt und sie auf diesem oder in diesem, gegebenenfalls durch Hitzeeinwirkung und/oder gegebenenfalls durch Einwirkung eines alkalisch wirkenden Mittels, fixiert. Solche Färbe- und Fixierweisen sind in der Literatur zahlreich beschrieben.

So erhält man mit ihnen auf Cellulosefasern nach den Ausziehverfahren aus langer Flotte unter Verwendung von verschiedensten säurebindenden Mitteln und gegebenenfalls neutralen Salzen, wie Natriumchlorid oder Natriumsulfat, sehr gute Farbausbeuten sowie einen ausgezeichneten Farbaufbau. Man färbt bevorzugt in wäßrigem Bad bei Temperaturen zwischen 40 und 80°C, gegebenenfalls bei Temperaturen bis zu 120°C unter Druck, und gegebenenfalls in Gegenwart von üblichen Färbereihilfsmitteln. Sehr gute Farbausbeuten erhält

man bereits bei 40° C.

Man kann dabei so vorgehen, daß man das Material in das warme Bad einbringt und dieses allmählich auf die gewünschte Färbetemperatur erwärmt und den Färbeprozeß bei dieser Temperatur zu Ende führt. Die das Ausziehen des Farbstoffes beschleunigenden Neutralsalze können dem Bade gewünschtenfalls auch erst nach Erreichen der eigentlichen Färbetemperatur zugesetzt werden.

Nach dem Klotzverfahren werden auf Cellulosefasern ebenfalls gute Farbausbeuten und ein guter Farbaufbau erhalten, wobei durch Verweilen bei Raumtemperatur oder erhöhter Temperatur, beispielsweise bis zu etwa 60° C, durch Dämpfen oder mit Trockenhitze in üblicher Weise fixiert werden kann.

Ebenfalls nach den üblichen Druckverfahren für Cellulosefasern, die einphasig, beispielsweise durch Bedrucken mittels einer die erfindungsgemäße Verbindung und Natriumbicarbonat oder ein anderes säurebindendes Mittel enthaltenden Druckpaste und anschließendes Dämpfen bei 100 bis 103° C, oder zweiphasig, beispielsweise durch Bedrucken mittels einer die erfindungsgemäße Verbindung enthaltenden neutralen oder schwach sauren Druckpaste und anschließendes Fixieren der erfindungsgemäßen Verbindung entweder durch Hindurchführen des bedruckten Materials durch ein heißes alkali- und elektrolythaltiges Bad oder durch Überklotzen mit einer alkalischen elektrolythaltigen Klotzflotte und anschließendes Verweilen dieses Überklotzten Materials oder Dämpfen oder Behandlung mit Trockenhitze, durchgeführt werden können, erhält man farbstarke Drucke mit gutem Stand der Konturen und einem klaren Weißfond. Der Ausfall der Drucke ist von wechselnden Fixierbedingungen nur wenig abhängig.

Die säurebindenden und die Fixierung der Verbindung der Formel (1) auf den Cellulosefasern bewirkenden Mittel sind beispielsweise wasserlösliche basische Salze der Alkalimetalle und Erdalkalimetalle von organischen oder anorganischen Säuren oder Verbindungen, die in der Hitze Alkali freisetzen. Insbesondere sind die Alkalimetallhydroxide und Alkalimetallsalze von schwach bis mittelstarken anorganischen oder organischen Säuren zu nennen, vorzugsweise deren Natrium- und Kaliumverbindungen. Solche säurebindenden Mittel sind beispieleweise Natriumhydroxid, Kaliumhydroxid, Natriumcarbonat, Natriumbicarbonat, Kaliumcarbonat, Natriumformiat, Natriumdihydrogenphosphat, Dinatriumhydrogenphosphat, Natriumtrichloracetat, Wasserglas oder Trinatriumphosphat.

Durch die Behandlung der erfindungsgemäßen Verbindungen (Farbstoffe) mit den säurebindenden Mitteln, gegebenenfalls unter Wärmeeinwirkung, werden die erfindungsgemäßen Farbstoffe chemisch an die Cellulosefaser gebunden; insbesondere die Cellulosefärbungen zeigen nach der üblichen Nachbehandlung durch Spülen zur Entfernung von nicht fixierten Farbstoffanteilen ausgezeichnete Naßechtheiten, zumal sich nicht fixierte Farbstoffanteile gut auswaschen lassen.

Die Färbungen auf Polyurethan oder natürlichen oder synthetischen Polyamidfasern werden üblicherweise aus saurem Milieu ausgeführt. So kann man beispielsweise dem Färbebad Essigsäure und/oder Ammoniumsulfat und/oder Essigsäure und Ammoniumacetat zufügen, um den gewünschten pH-Wert zu erhalten. Zwecks Erreichung einer brauchbaren Egalität der Färbung empfiehlt sich ein Zusatz an üblichen Egalisierhilfsmitteln, wie beispielsweise auf Basis eines Umsetzungsproduktes von Cyanurchlorid mit der dreifach molaren Menge einer Aminobenzolsulfonsäure und/oder einer Aminonaphthalinsulfonsäure oder auf Basis eines Umsetzungsproduktes von beispielsweise Stearylamin mit Ethylenoxid. In der Regel wird das zu färbende Material bei einer Temperatur von etwa 40° C in das Bad eingebracht, dort einige Zeit darin bewegt, das Färbebad dann auf den gewünschten schwach sauren, vorzugsweise schwach essigsauren, pH-Wert nachgestellt und die eigentliche Färbung bei einer Temperatur zwischen 60 und 98° C durchgeführt. Die Färbungen können aber auch bei Siedetemperatur oder bei Temperaturen bis zu 120° C (unter Druck) ausgeführt werden.

Die erfindungsgemäßen Verbindungen der allgemeinen Formel (1) besitzen ein hohes Egalisiervermögen bei der färberischen Anwendung, und die mit ihnen hergestellten Färbungen und Drucke zeichnen sich in der Regel durch hohe Farbstärken aus.

Die Färbungen und Drucke besitzen, insbesondere auf Cellulosefasermaterialien, eine sehr gute Lichtechtheit und gute bis sehr gute Naßechtheiten, wie beispielsweise gute bis sehr gute Waschechtheiten bei 60 bis 95° C, auch in Gegenwart von Perboraten, saure und alkalische Walk-, Überfärbe- und Schweißechtheiten, gute bis sehr gute saure und alkalische Schweißechtheiten, eine hohe Dampfbeständigkeit, gute bis sehr gute Alkali-, Säure-, Wasser- und Seewasserechtheiten, desweiteren eine gute Plissierechtheit, Bügelechtheit und Reibechtheit. Ebenso besitzen sie eine sehr gute Säurelagerbeständigkeit ("acid fading") beim Lagern von feuchten, noch Essigsäure enthaltendem, gefärbtem Material.

Das Verfahren des Färbens auf Wolle erfolgt hierbei in üblicher und bekannter Färbeweise, indem die faserreaktive Verbindung der allgemeinen Formel (1) bevorzugt zunächst aus saurem Färbebad mit einem pH von etwa 3,5 bis 5,5 unter Kontrolle des pH-Wertes dem Ausziehprozeß unterworfen wird und gegen Ende der Färbezeit der pH-Wert in den neutralen und gegebenenfalls schwach alkalischen Bereich bis zu einem pH-Wert von 8,5 verschoben wird, um besonders bei einer erwünschten Erzielung von hohen Farbtiefen die volle reaktive Bindung zwischen diesem Farbstoff der Formel (1) und der Faser herbeizuführen. Gleichzeitig wird der nicht reaktiv gebundene Farbstoffanteil abgelöst.

Die hier beschriebene Verfahrensweise gilt auch zur Herstellung von Färbungen auf Fasermaterialien aus anderen natürlichen Polyamiden oder aus synthetischen Polyamiden und Polyurethanen. Die Färbungen werden bei Temperaturen von 60 bis 100° C durchgeführt, jedoch können sie auch in geschlossenen Färbeapparaturen bei Temperaturen bis zu 106° C erfolgen. Da die Wasserlöslichkeit der Verbindungen der allgemeinen Formel (1) sehr gut ist, lassen sie sich auch mit Vorteil bei üblichen kontinuierlichen Färbeverfahren einsetzen. Die Farbstärke der erfindungsgemäßen Verbindungen der allgemeinen Formel (1) ist

sehr hoch. Sie liefern auf den Fasermaterialien, insbesondere beim reaktiven Färben von Wolle, farbßtarke, echte Färbungen. Bei Anwendung von Färbetemperaturen von 100 biß 106°C ißt eine hohe Baderschöpfung festzustellen.

Bei den mit den erfindungsgemäßen Verbindungen der allgemeinen Formel (1) erhältlichen Färbungen kann auf eine ansonsten übliche ammoniakalische Nachbehandlung der gefärbten Ware verzichtet werden. Im Vergleich zu konstitutionell ähnlichen bekannten Farbstoffen zeigen sie in überraschender Weise einen sehr guten Farbaufbau, wobei die brillante Nuance in tiefen Tönen erhalten bleibt. Darüber hinaus zeigen sie eine gute Kombinierbarkeit mit anderen faserreaktiven Wollfarbstoffen, die ein überraschend egales Färben der Faser ermöglichen. Ebenso läßt sich Material aus Wollfasern unterschiedlicher Provenienz mit der erfindungsgemäßen Verbindung egal färben. Zur Verbesserung des Egalisierverhaltens kann gegebenenfalls ein übliches Egalisierhilfsmittel, wie beispielsweise N-Methyltaurin, zugesetzt werden.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in diesen Beispielen formelmäßig beschriebenen Verbindungen sind in Form der freien Säuren angegeben; im allgemeinen werden sie in Form ihrer Natrium- oder Kaliumsalze hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, wie Natrium- oder Kaliumsalze, in die Synthese eingesetzt werden.

**Beispiel 1**

a) Zur Herstellung von 3,4-Di-(β-sulfatoethylsulfonyl)-anilin, das als Diazokomponente in der Synthese der erfindungsgemäßen Azoverbindungen dient, werden in eine Mischung aus 531 Teilen 4-Chlor-3-(β-hydroxyethylsulfonyl)-nitrobenzol, 240 Teilen Thioglykol und 400 Teilen Wasser bei 20°C innerhalb von drei Stunden unter Rühren und Sauerstoffausschluß gleichmäßig 175 Teile festes Kaliumcarbonat gegeben. Der Reaktionsansatz wird noch 12 bis 15 Stunden bei 25°C nachgerührt, bis durch dünnschichtchromatographische Kontrolle kein Ausgangsprodukt mehr nachweisbar ist. Der Ansatz wird auf 10 bis 15°C abgekühlt und das ausgefallene 4-(β-Hydroxyethylthio)-3-(β-hydroxyethylsulfonyl)-nitrobenzol durch Filtration isoliert, mit Wasser neutral gewaschen und getrocknet.

307 Teile dieser Verbindung werden mit 4,5 Teilen Kaliumwolframat in 1200 Teilen Wasser eingerührt, und der Ansatz wird mit einer wäßrigen 2n-Salzsäure auf einen pH-Wert zwischen 4,5 und 5 eingestellt und auf 70 bis 75°C erwärmt. Innerhalb einer Stunde werden bei dieser Temperatur 100 Teile einer 35 %-igen wäßrigen Wasserstoffperoxid-Lösung langsam hinzugegeben, der Ansatz wird danach innerhalb von 30 Minuten auf 90 bis 95°C erwärmt und innerhalb von 90 Minuten langsam mit weiteren 110 Teilen dieser Wasserstoffperoxid-Lösung versetzt. Der Ansatz wird noch 13 bis 14 Stunden bei 90 bis 95°C nachgerührt. Nach dem Abkühlen auf 20 bis 25°C werden die abgeschiedenen Kristalle abgesaugt, mit Wasser gewaschen und getrocknet. Es werden etwa 325 Teile 3,4-Di-(β-hydroxyethylsulfonyl)-nitrobenzol erhalten.

111 Teile dieser Verbindung werden in eine 85°C warme Aufschlämmung von 50 Teilen Eisenpulver in 350 Teilen Wasser und 1 Teil konzentrierter wäßriger Salzsäure unter gutem Rühren eingetragen; hierbei kann die Temperatur ohne weiteres Heizen bei 85 bis 95°C gehalten werden. Man rührt bei dieser Temperatur noch 30 Minuten nach, stellt sodann mit Natronlauge einen pH-Wert von 8 ein und saugt den Ansatz heiß ab. Beim Abkühlen des Filtrates kristallisiert das 3,4-Di-(β-hydroxyethylsulfonyl)-anilin aus, das hieraus zu etwa 85 Teilen isoliert werden kann.

61,8 Teile dieser Anilin-Verbindung werden bei etwa 20°C in eine Mischung aus 200 Teilen Schwefelsäuremonohydrat und 25 Teilen 65 %-igem Oleum unter Rühren eingetragen; es wird noch 12 Stunden nachgerührt. Die erhaltene klare Lösung wird anschließend bei einer Temperatur unterhalb 5°C in 1000 Teile einer 25 %-igen wäßrigen Kaliumchlorid-Lösung langsam eingerührt. Man rührt noch drei Stunden nach und saugt das ausgefallene Produkt ab, wäscht es mit 25 %-iger wäßriger Kaliumchlorid-Lösung und trocknet es. Es wird ein kaliumchloridhaltiges Pulver erhalten, das das 3,4-Di-(β-sulfatoethylsulfonyl)-anilin zu etwa 60 % enthält.

b) Eine Lösung von 45,9 Teilen (bezogen auf 100 %-ige Substanz) der Kaliumverbindung des 2,5-Di-(β-sulfatoethylsulfonyl)-anilins in 400 Teilen Wasser wird mit 200 Teilen Eis und 5 Volumenteilen einer konzentrierten Schwefelsäure versetzt. Man diazotiert durch langsame Zugabe von 10,2 Volumenteilen einer wäßrigen 5n-Natriumnitrit-Lösung innerhalb von 60 Minuten. Der Ansatz wird noch bei einer Temperatur zwischen 0 und 3°C bis zur vollständigen Diazotierung nachgerührt, danach der noch geringe Nitritüberschuß, wie üblich, mit Amidosulfonsäure zerstört.

c) Zu dieser Diazoniumsalzlösung läßt man unter Rühren innerhalb 10 Minuten bei etwa 5°C eine wäßrige schwefelsaure Lösung aus 18,8 Teilen 3-Chlor-N,N-bis-(β-sulfatoethyl)-anilin einlaufen. Man stellt mit Natriumcarbonat oder vorzugsweise zur Bindung der Schwefelsäure und deren Ausfällung als Calciumsulfat mit Calciumcarbonat einen pH-Wert zwischen 2 und 2,2 ein und hält das Kupplungsgemisch noch 3 Stunden bei diesem pH-Wert. Sodann wird mit Natriumcarbonat oder vorzugsweise Calciumcarbonat ein pH-Wert von 5,5 eingestellt und das ausgefallene Calciumsulfat abgesaugt. Das Filtrat wird mit Kaliumchlorid in einer

Menge, die 20 % des Volumens des Filtrates entspricht, unter Rühren versetzt; es wird 4 Stunden nachgerührt und das ausgefallene Produkt abgesaugt und getrocknet.

Es wird ein gelbstichig rotes Pulver erhalten, das neben Kaliumchlorid die erfindungsgemäße Verbindung der Formel

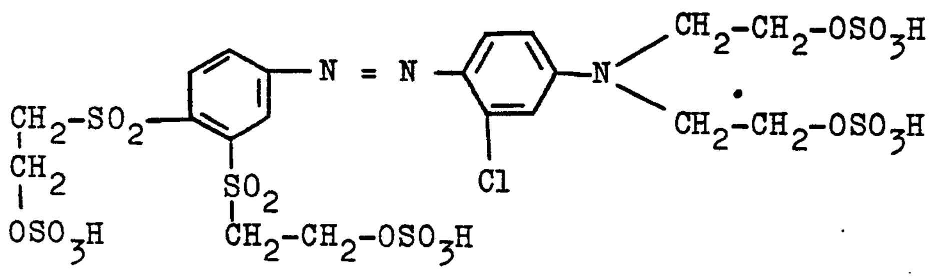

als deren Kaliumsalz enthält. Die erfindungsgemäße Azoverbindung zeigt in wäßriger Lösung ein $\lambda_{max}$ von 493 nm; sie besitzt sehr gute Farbstoffeigenschaften und eignet sich sehr gut zum Färben und Bedrucken von den in der Beschreibung genannten Fasermaterialien, wie insbesondere Cellulosefasermaterialien, wie Baumwolle. Unter Anwendung der für faserreaktive Farbstoffe üblichen Applikations- und Fixiermethoden liefert sie mit hohem Fixiergrad farbstarke gelbstichig rote Färbungen und Drucke mit guten Echtheitseigenschaften, wie insbesondere guten Waschechtheiten bei 60 bis 95°C, guter alkalischer Schweißechtheit, guter Chlorwasserechtheit und guten Schweißlichtechtheiten.

**Beispiel 2**

Zu einer gemäß Beispiel 1b) hergestellten Lösung der Diazoniumverbindung des 3,4-Di-(β-sulfatoethylsulfonyl)-anilins gibt man 14,2 Teile 1-(4-Sulfophenyl)-3-carboxy-5-pyrazolon.

Die Kupplung wird bei einem pH-Wert zwischen 2,5 und 3 und einer Temperatur zwischen 0 und 3°C nach etwa 1 Stunde beendet; der pH-Wert wird mittels Natriumbicarbonat eingestellt und gehalten. Die erfindungsgemäße Azoverbindung wird mit Natriumchlorid ausgesalzen und isoliert.

Es wird ein gelbes Pulver erhalten, das neben Natriumchlorid die erfindungsgemäße Verbindung der Formel

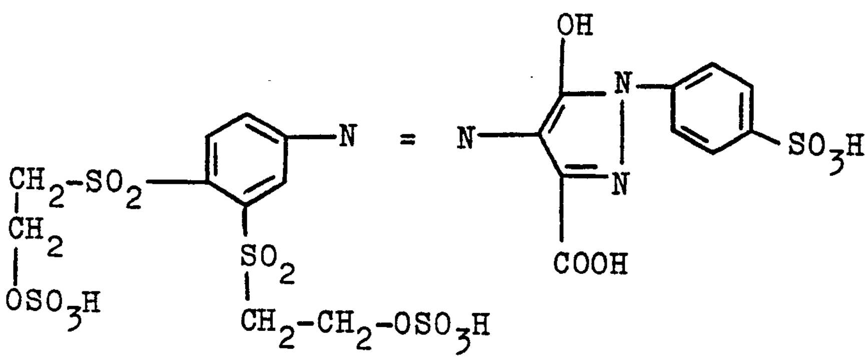

als deren Natriumsalz enthält. Die erfindungsgemäße Azoverbindung zeigt in wäßriger Lösung ein $\lambda_{max}$ von 405 nm; sie besitzt sehr gute Farbstoffeigenschaften und eignet sich sehr gut zum Färben und Bedrucken von in der Beschreibung genannten Fasermaterialien, wie insbesondere Cellulosefasermaterialien, wie Baumwolle. Unter Anwendung der für faserreaktive Farbstoffe üblichen Applikations- und Fixiermethoden liefert sie mit hohem Fixiergrad farbstarke gelbe Färbungen und Drucke mit guten Echtheitseigenschaften, insbesondere Naßechtheiten, wie insbesondere guten Waschechtheiten bei 60 bis 95°C, guter alkalischer Schweißechtheit und Chlorwasserechtheit sowie guten Schweißlichtechtheiten.

**Beispiele 3 bis 32**

In den nachfolgenden Tabellenbeispielen sind weitere erfindungsgemäße Azoverbindungen entsprechend der allgemeinen Formel (1) mit Y gleich den β-Sulfatoethyl-Gruppen mit Hilfe des Restes K der Kupplungskomponente beschrieben.

Sie lassen sich in erfindungsgemäßer Weise, beispielsweise gemäß den Verfahrensweisen der obigen Ausführungsbeispiele, aus der Diazokomponente und der Kupplungskomponente H-K herstellen. Sie besitzen

ebenfalls sehr gute faserreaktive Farbstoffeigenschaften und zeichnen sich durch gute anwendungstechnische Eigenschaften aus. Sie liefern farbstarke Färbungen und Drucke auf den in der Beschreibung genannten Fasermaterialien, wie insbesondere Cellulosefasermaterialien, nach den für faserreaktive Farbstoffe üblichen Applikations- und Fixiermethoden mit den in dem jeweiligen Tabellenbeispiel angegebenen Farbton (hier auf Baumwolle) mit teils sehr guten Echtheitseigenschaften.

| Bsp. | Rest der Kupplungskomponente | Farbton |
|---|---|---|
| 3 | 4-[Bis-(β-sulfatoethyl)-amino]-phenyl | gelbstichig rot |
| 4 | 4-[N-Ethyl-N-(β-sulfato-ethyl)-amino]-phenyl | dito |
| 5 | 2-Acetylamino-4-[bis-(β-sulfatoethyl)-amino]-phenyl | rot |
| 6 | 2-Acetylamino-5-methoxy-4-[bis-(β-sulfatoethyl)-amino]-phenyl | rot |
| 7 | 2-Methylsulfonylamido-4-[bis-(β-sulfatoethyl)-amino]-phenyl | blaustichig rot |
| 8 | 4-[N-(β-Cyanoethyl)-N-(β-sulfatoethyl)-amino]-phenyl | dito |
| 9 | 4-[N-(β-Cyanoethyl)-N-(β,γ-disulfato-n-propyl)-amino]-phenyl | rot |
| 10 | 2-Trifluoromethyl-4-[bis-(β-sulfatoethyl)-amino]-phenyl | gelbstichig rot |
| 11 | 2-Cyano-4-[bis-(β-sulfato-ethyl)-amino -phenyl | dito |
| 12 | 2-(N,N-Diethyl-sulfamoyl)-4-[bis-(β-sulfatoethyl)-amino]-phenyl | rot |
| 13 | 2-N-Phenyl-sulfamoyl-4-[bis-(β-sulfatoethyl)amino]-phenyl | rot |
| 14 | 2-(N,N-Di-n-butyl-sulfamoyl)-4-[bis-(β-sulfatoethyl)-amino]-phenyl | rot |
| 15 | 2-[N,N-Di-(β-sulfatoethyl)-sulfamoyl]-4-(diethylamino)-phenyl | rot |
| 16 | 2-[N-Methyl-N-(β-sulfatoethyl)-sulfamoyl]-4-(diethylamino)-phenyl | gelbstichig rot |
| 17 | 3-Chlor-4-(β-sulfatoethyl)-amino-phenyl | rotstichig gelb |
| 18 | 3-Chlor-4-(β,γ-disulfato-n-propyl)-amino-phenyl | dito |
| 19 | 2-Acetylamino-5-chlor-4-(β-sulfato-n-propyl)-amino-phenyl | gelbstichig rot |
| 20 | 2-Acetylamino-5-chlor-4-(β,γ-disulfato-n-propyl)-amino-phenyl | gelbstichig rot |
| 21 | 4-[N-(β-Sulfoethyl)-N-ethyl-amino]-phenyl | dito |

| | | |
|---|---|---|
| 22 | 4-[N-(γ-Sulfo-n-propyl)-N-ethylamino]-phenyl | dito |
| 23 | 2-Chlor-4-[bis-(γ-sulfo-n-propyl)-amino]-phenylrot | gelbstichig |
| 24 | 2-Trifluormethyl-4-[bis-(γ-sulfo-n-propyl)-amino]-phenyl | dito |
| 25 | 2-Chlor-4-[bis-(β-sulfo-ethyl)-amino]-phenyl | dito |
| 26 | 2-Trifluormethyl-4-[bis-(β-sulfoethyl)-amino]-phenyl | dito |
| 27 | 2-N-Phenyl-sulfamoyl-4-[bis-(γ-sulfo-n-propyl)-amino]-phenyl | dito |
| 28 | 2-N-Phenyl-sulfamoyl-4-[bis-(β-sulfoethyl)-amino]-phenyl | dito |
| 29 | 2-[N-(β-Sulfoethyl)-sulfamoyl]-4-diethylamino-phenyl . | dito |
| 30 | 1-(4-Sulfophenyl)-3-carboxy-pyrazol-5-on-4-yl | orange |
| 31 | 1-(3-Sulfophenyl)-3-methyl-pyrazol-5-on-4-yl | orange |
| 32 | 1-(2,5-Dichlor-4-sulfo-phenyl)-3-methyl-pyrazol-5-on-4-yl | orange |

**Patentansprüche**

1. Monoazoverbindungen der allgemeinen Formel (1)

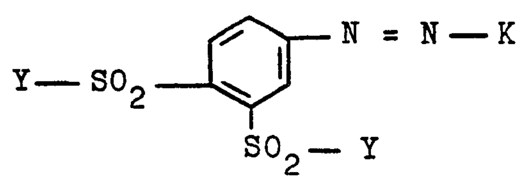

(1)

in welcher K einen Rest der allgemeinen Formel (2) oder (3)

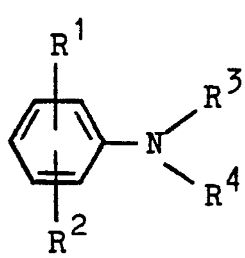

(2)

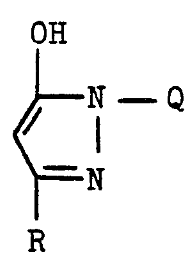

(3)

bedeutet und die übrigen Formelreste folgende Bedeutung besitzen:

Y ist die Vinylgruppe oder eine Gruppe der Formel (4)

$$-CH_2-CH_2-X \quad (4)$$

in welcher

X ein durch ein Alkali unter Bildung der Vinylgruppe eliminierbaren Substituenten ist;

$R^1$ ist ein Wasserstoffatom, eine Alkylgruppe von 1 bis 4 C-Atomen, eine Alkoxygruppe von 1 bis 4 C-Atomen, eine Sulfogruppe (entsprechend der allgemeinen Formel $-SO_3M$, in welcher M ein Wasserstoffatom oder ein Alkalimetall oder das Äquivalent eines Erdalkalimetalls ist), eine Carboxygruppe (entsprechend der allgemeinen Formel -COOM mit M der obengenannten Bedeutung) oder ein Halogenatom;

$R^2$ ist ein Wasserstoffatom, eine Alkylgruppe von 1 bis 4 C-Atomen, eine Alkoxygruppe von 1 bis 4 C-Atomen, ein Halogenatom, die Cyangruppe, die Trifluormethylgruppe, eine Alkanoylaminogruppe von 2 bis 5 C-Atomen oder eine Alkylsulfonylaminogruppe von 1 bis 4 C-Atomen oder

$R^2$ ist die Sulfamoylgruppe, die am Stickstoffatom durch 1 oder 2 Substituenten aus der Gruppe Alkyl von 1 bis 4 C-Atomen, substituiertes Alkyl von 1 bis 4 C-Atomen, Cycloalkyl, Phenyl und substituiertes Phenyl mono- oder disubstituiert sein kann, oder

$R^2$ ist die Ureidogruppe oder eine Ureidogruppe, die am endständigen Stickstoffatom durch 1 oder 2 Substituenten aus der Gruppe Alkyl von 1 bis 4 C-Atomen, substituiertes Alkyl von 1 bis 4 C-Atomen, Cycloalkyl, Phenyl und substituiertes Phenyl mono- oder disubstituiert sein kann;

$R^3$ ist ein Wasserstoffatom oder eine Alkylgruppe von 1 bis 6 C-Atomen, bevorzugt von 1 bis 4 C-Atomen, die durch einen oder zwei Substituenten substituiert sein kann, wobei die Substituenten aus der Gruppe Alkoxy von 1 bis 4 C-Atomen, Halogen, Cyan, Hydroxy, Carboxy, Sulfo, Sulfato (entsprechend der allgemeinen Formel $-OSO_3M$ mit M der oben angegebenen Bedeutung), Phosphato (entsprechend der allgemeinen Formel $-OPO_3M_2$ mit M der oben angegebenen Bedeutung), Carbamoyl, Sulfamoyl, N-($C_1$-$C_4$-Alkyl)-carbamoyl mit einer Sulfato-, Phosphato-, Hydroxy- oder Sulfogruppe als Substituent im Alkylrest, N-($C_1$-$C_4$-Alkyl)-sulfamoyl mit einer Sulfato-, Phosphato-, Hydroxy- oder Sulfogruppe als Substituent im Alkylrest, N,N-Di-($C_1$-$C_4$-Alkyl)-sulfamoyl mit einer Sulfato-, Phosphato-, Hydroxy- oder Sulfogruppe als Substituent in einer oder beiden Alkylresten und N,N-Di-($C_1$-$C_4$-Alkyl)-carbamoyl mit einer Sulfato-, Phosphato-, Hydroxy- oder Sulfogruppe als Substituent in einer oder beiden Alkylresten ausgewählt sind, oder

$R^3$ ist eine Alkenylgruppe von 2 bis 5 C-Atomen;

$R^4$ ist eine Alkylgruppe von 1 bis 6 C-Atomen, bevorzugt von 1 bis 4 C-Atomen, die durch einen oder zwei Substituenten substituiert sein kann, wobei die Substituenten aus der Gruppe Alkoxy von 1 bis 4 C-Atomen, Halogen, Cyan, Hydroxy, Carboxy, Sulfo, Sulfato, Phosphato, Carbamoyl, Sulfamoyl, N-($C_1$-$C_4$-Alkyl)-carbamoyl mit einer Sulfato-, Phosphato-, Hydroxy- oder Sulfogruppe als Substituent im Alkylrest, N-($C_1$-$C_4$-Alkyl)-sulfamoyl mit einer Sulfato-, Phosphato-, Hydroxy- oder Sulfogruppe als Substituent im Alkylrest, N,N-Di-($C_1$-$C_4$-Alkyl)-sulfamoyl mit einer Sulfato-, Phosphato-, Hydroxy- oder Sulfogruppe als Substituent in einer oder beiden Alkylresten und N,N-Di-($C_1$-$C_4$-Alkyl)-carbamoyl mit einer Sulfato-, Phosphato-, Hydroxy- oder Sulfogruppe als Substituent in einer oder beiden Alkylresten ausgewählt sind, oder ist eine Alkenylgruppe von 2 bis 4 C-Atomen;

R ist die Methylgruppe, eine Carboxygruppe, eine Carbalkoxygruppe von 2 bis 5 C-Atomen, die Carbamoylgruppe oder ein gegebenenfalls durch Sulfo, Carboxy, Methyl, Ethyl, Methoxy, Ethoxy und/oder Chlor substituierter Phenylrest;

Q ist der Phenylrest, der substituiert sein kann, oder ist ein Naphthylrest, der durch 1, 2 oder 3 Sulfogruppen und gegebenenfalls durch eine Alkylgruppe von 1 bis 4 C-Atomen, eine Alkoxygruppe von 1 bis 4 C-Atomen, ein Chloratom oder eine Alkanoylaminogruppe von 2 bis 5 C-Atomen substituiert sein kann.

2. Verbindung nach Anspruch 1, dadurch gekennzeichnet, daß K den in Anspruch 1 definierten Rest der Formel (2) bedeutet.

3. Verbindung nach Anspruch 2, dadurch gekennzeichnet, daß $R^1$ ein Wasserstoffatom, eine Alkylgruppe von 1 bis 4 C-Atomen, eine Alkoxygruppe von 1 bis 4 C-Atomen, eine Sulfogruppe, eine Carboxygruppe oder ein Chloratom ist, $R^2$ ein Wasserstoffatom, eine Methyl-, Ethyl-, Methoxy- oder Ethoxygruppe oder ein Chloratom oder eine Alkanoylaminogruppe von 2 bis 5 C-Atomen, die Methylsulfonyl-amino-, Trifluormethyl-, Cyano-, N,N-Diethyl-sulfamoyl-, N,N-Di-n-butyl-sulfamoyl-, N-Methyl-N-(β-sulfatoethyl)sulfamoyl-, N-(β-Sulfoethyl)-sulfamoyl-, N-Phenylsulfamoyl-, Ureido- oder N-Phenyl-ureido-Gruppe ist, $R^3$ ein Wasserstoffatom oder eine Alkylgruppe von 1 bis 4 C-Atomen bedeutet, die durch eine Sulfo-, Carboxy-, Hydroxy-, Cyano-, Sulfato- oder Phosphatogruppe substituiert sein kann, oder eine Alkenylgruppe von 2 bis 4 C-Atomen darstellt und $R^4$ eine Alkylgruppe von 1 bis 4 C-Atomen ist, die durch eine Hydroxy-, Cyano-, Sulfo-, Carboxy-, Sulfato- oder Phosphatogruppe substituiert sein kann, oder eine Alkenylgruppe von 2 bis 4 C-Atomen ist oder eine Alkylgruppe von 1 bis 4 C-Atomen darstellt, die durch eine N-(β-Sulfatoethyl)-carbamoyl-, N-Methyl-N-(β-sulfatoethyl)-carbamoyl- oder N,N-Di-(β-sulfatoethyl)-carbamoyl-Gruppe substituiert ist.

4. Verbindung nach Anspruch 2, dadurch gekennzeichnet, daß $R^1$ ein Wasserstoffatom, eine Alkylgruppe von 1 bis 4 C-Atomen, eine Alkoxygruppe von 1 bis 4 C-Atomen, eine Sulfogruppe, eine Carboxygruppe oder ein Chloratom ist, $R^2$ ein Wasserstoffatom, eine Methyl-, Ethyl-, Methoxy- oder Ethoxygruppe oder ein Chloratom oder eine Alkanoylaminogruppe von 2 bis 5 C-Atomen, die Trifluormethyl-, Methylsulfonylamino-, Cyano-, N,N-Diethyl-sulfamoyl-, N-Methyl-N-(β-sulfatoethyl)-sulfamoyl-, N-(β-Sulfatoethyl)sulfamoyl-, Ureido- oder N-Phenyl-ureido-Gruppe ist, $R^3$ ein Wasserstoffatom oder eine Alkylgruppe von 1 bis 4 C-Atomen bedeutet, die durch eine Sulfo-, Carboxy-, Hydroxy-, Cyano- oder Sulfatogruppe substituiert sein kann, und $R^4$ eine Alkylgruppe von 1 bis 4 C-Atomen ist, die durch 1 oder 2 Substituenten, bevorzugt einen Substituenten, aus der Gruppe Sulfo, Sulfato und Hydroxy substituiert sein kann, oder eine Propenylgruppe oder eine β-(N-β-Sulfatoethyl-carbamoyl)-ethyl-, β-(N-Methyl-N-β-sulfatoethyl-carbamoyl)-ethyl- oder β-[N,N-Di-(β-sulfatoethyl)-carbamoyl]-ethyl-Gruppe ist.

5. Verbindung nach Anspruch 1 entsprechend der allgemeinen Formel (5)

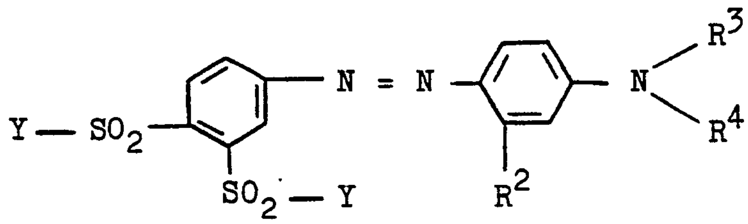

(5)

in welcher Y, $R^1$, $R^2$, $R^3$ und $R^4$ die in Anspruch 1 genannten Bedeutungen haben.

6. Verbindung nach Anspruch 5, dadurch gekennzeichnet, daß $R^2$, $R^3$ und $R^4$ die in Anspruch 3 genannten Bedeutungen haben.

7. Verbindung nach Anspruch 5, dadurch gekennzeichnet, daß $R^2$, $R^3$ und $R^4$ die in Anspruch 4 genannten Bedeutungen haben.

8. Verbindung nach Anspruch 5, dadurch gekennzeichnet, daß $R^2$ für ein Chloratom oder die Trifluormethylgruppe stehen und beide Y sowie $R^3$ und $R^4$ jedes eine β-Sulfatoethyl-Gruppe darstellen.

9. Verbindung nach mindestens einem der Ansprüche 1 bis 8, dadurch kennzeichnet, daß beide Y eine β-Sulfatoethyl-Gruppe darstellen.

10. Verfahren zur Herstellung einer in Anspruch 1 genannten und definierten Azoverbindungen der allgemeinen Formel (1) dadurch gekennzeichnet, daß man eine Verbindung der allgemeinen Formel (6)

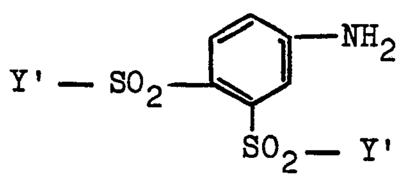

(6)

in welcher Y' eine der für Y genannten Bedeutungen besitzt oder die β-Hydroxyethyl-Gruppe bedeutet, diazotiert und mit einer Kupplungskomponente der allgemeinen Formel (7)

H-K (7)

in welcher K die in Anspruch 1 genannte Bedeutung besitzt, kuppelt und im Falle, daß von einer Diazokomponente der Formel (6) ausgegangen wird, in welcher Y' für die β-Hydroxyethyl-Gruppe steht, die gebildete Azoverbindung der allgemeinen Formel (8)

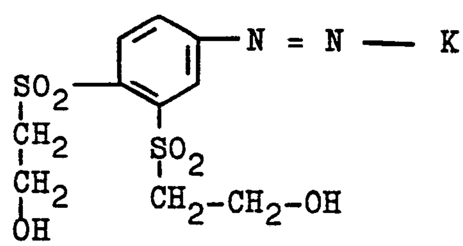

(8)

in welcher K die in Anspruch 1 genannte Bedeutungen hat, mit einem Acylierungs- oder Veresterungsmittel zur Überführung in eine Azoverbindung der allgemeinen Formel (1), in welcher X für einen alkalisch eliminierbaren Acyloxyrest steht, umsetzt.

11. Verfahren zur Herstellung einer in Anspruch 1 genannten und definierten Verbindung der allgemeinen Formel (1), in welcher der Rest K eine oder mehrere Sulfato- oder Phosphatogruppen an eine bzw. mehrere aliphatische Gruppe(n) gebunden enthält und gegebenenfalls eines oder beide Y eine β-Sulfatoethyl- oder Phosphatoethyl-Gruppe darstellen, dadurch gekennzeichnet, daß man eine Azoverbindung entsprechend der allgemeinen Formel (1), die eine oder mehrere Hydroxygruppe(n) an eine oder mehrere aliphatische Gruppe(n) in dem Rest K und gegebenenfalls β-Hydroxyethylsulfonyl-Gruppen als Rest $-SO_2-Y$ gebunden enthält, mit einem Sulfatierungs- bzw. Phosphatierungsmittel umsetzt.

12. Verwendung einer Verbindung von Anspruch 1 oder einer nach Anspruch 10 oder 11 hergestellten Verbindung der allgemeinen Formel (1) als Farbstoff, vorzugsweise zum Färben oder Bedrucken von hydroxy- und/oder carbonamidgruppenhaltigem Material, insbesondere Fasermaterial.

13. Verfahren zum Färben (einschließlich Bedrucken) von hydroxy- und/oder carbonamidgruppenhaltigem Material, insbesondere Fasermaterial, bei welchem man einen Farbstoff auf das Material aufbringt oder in das

Material einbringt und ihn mittels Wärme und/oder mittels eines säurebindenden Mittels fixiert, dadurch gekennzeichnet, daß man als Farbstoff eine Verbindung der in Anspruch 1 genannten und definierten allgemeinen Formel (1) einsetzt.

**Claims**

1. A monoazo compound of the formula (1)

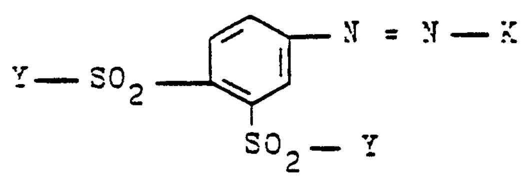

(1)

in which K denotes a radical of the formula (2) or (3)

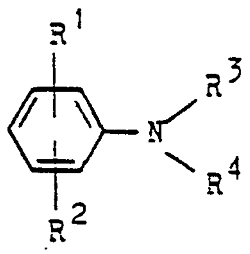

(2)

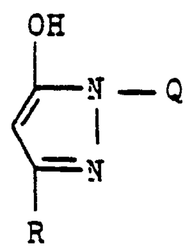

(3)

and the remaining formula radicals have the following meaning:

Y is the vinyl group or a group of the formula (4)

$-CH_2-CH_2-X$ (4)

in which

X denotes a substituent which is eliminatable by means of an alkali with formation of the vinyl group;

$R^1$ is a hydrogen atom, an alkyl group of 1 to 4 carbon atoms, an alkoxy group of 1 to 4 carbon atoms, a sulfo group (conforming to the formula $-SO_3M$, in which M is a hydrogen atom or an alkali metal or one equivalent of an alkaline earth metal), a carboxyl group (conforming to the formula -COOM where M has the abovementioned meaning) or a halogen atom;

$R^2$ is a hydrogen atom, an alkyl group of 1 to 4 carbon atoms, an alkoxy group of 1 to 4 carbon atoms, a halogen atom, the cyano group, a trifluoromethyl group, an alkanoylamino group of 2 to 5 carbon atoms, or an alkylsulfonylamino group of 1 to 4 carbon atoms, or

$R^2$ is a sulfamoyl group which can be monosubstituted or disubstituted at the nitrogen atom by 1 or 2 substituents from the group consisting of alkyl of 1 to 4 carbon atoms, substituted alkyl of 1 to 4 carbon atoms, cycloalkyl, phenyl and substituted phenyl, or

$R^2$ is the ureido group or a ureido group which can monosubstituted or disubstituted at the terminal nitrogen atom by 1 or 2 substituents from the group consisting of alkyl of 1 to 4 carbon atoms, substituted alkyl of 1 to 4 carbon atoms, cycloalkyl, phenyl and substituted phenyl;

$R^3$ is a hydrogen atom or an alkyl group of 1 to 6 carbon atoms, preferably of 1 to 4 carbon atoms, which can be substituted by one or two substituents selected from the group consisting of alkoxy of 1 to 4 carbon atoms, halogen, cyano, hydroxyl, carboxyl, sulfo, sulfato (conforming to the formula $-OSO_3M$ where M has the abovementioned meaning), phosphato (conforming to the formula $-OPO_3M_2$ where M has the abovementioned meaning), carbamoyl, sulfamoyl, N-($C_1$-$C_4$-alkyl)carbamoyl having a sulfato, phosphato, hydroxyl or sulfo group as substituent in the alkyl radical, N-($C_1$-$C_4$-alkyl)sulfamoyl having a sulfato, phosphato, hydroxyl or sulfo group as substituent in the alkyl radical, N,N-di($C_1$-$C_4$-alkyl)sulfamoyl having a sulfato, phosphato, hydroxyl or sulfo group as substituent in either or both alkyl radicals and N,N-di($C_1$-$C_4$-alkyl)carbamoyl having a sulfato, phosphato, hydroxyl or sulfo group as substituent in either or both alkyl radicals, or

$R^3$ is an alkenyl group of 2 to 5 carbon atoms;

$R^4$ is an alkyl group of 1 to 6 carbon atoms, preferably of 1 to 4 carbon atoms, which can be substituted by one or two substituents selected from the group consisting of alkoxy of 1 to 4 carbon atoms, halogen, cyano,

hydroxyl, carboxyl, sulfo, sulfato, phosphato, carbamoyl, sulfamoyl, N-($C_1$-$C_4$-alkyl)-carbamoyl having a sulfato, phosphato, hydroxyl or sulfo group as substituent in the alkyl radical, N-($C_1$-$C_4$-alkyl)sulfamoyl having a sulfato, phosphato, hydroxyl or sulfo group as substituent in the alkyl radical, N,N-di($C_1$-$C_4$-alkyl)sulfamoyl having a sulfato, phosphato, hydroxyl or sulfo group as substituent in either or both alkyl radicals and N,N-di($C_1$-$C_4$-alkyl)-carbamoyl having a sulfato, phosphato, hydroxyl or sulfo group as substituent in either or both alkyl radicals, or is an alkenyl group of 2 to 4 carbon atoms;

R is a methyl group, a carboxyl group, a carbalkoxy group of 2 to 5 carbon atoms, a carbamoyl group or an optionally sulfo-, carboxyl-, methyl-, ethyl-, methoxy-, ethoxy- and/or chlorine-substituted phenyl radical;

Q is a phenyl radical which can be substituted, or is a naphthyl radical which can be substituted by 1, 2 or 3 sulfo groups and if desired by an alkyl group of 1 to 4 carbon atoms, an alkoxy group of 1 to 4 carbon atoms, a chlorine atom or an alkanoylamino group of 2 to 5 carbon atoms.

2. A compound as claimed in claim 1, wherein K denotes the radical of the formula (2) defined in claim 1.

3. A compound as claimed in claim 2, wherein $R^1$ is a hydrogen atom, an alkyl group of 1 to 4 carbon atoms, an alkoxy group of 1 to 4 carbon atoms, a sulfo group, a carboxyl group or a chlorine atom, $R^2$ is a hydrogen atom, a methyl, ethyl, methoxy or ethoxy group or a chlorine atom or an alkanoylamino group of 2 to 5 carbon atoms, a methylsulfonylamino, trifluormethyl, cyano, N,N-diethyl-sulfamoyl, N,N-di-n-butyl-sulfamoyl, N-methyl-N-(β-sulfatoethyl)-sulfamoyl, N-(β-sulfoethyl)-sulfamoyl, N-phenylsulfamoyl, ureido or N-phenylureido group, $R^3$ denotes a hydrogen atom or an alkyl group of 1 to 4 carbon atoms, which can be substituted by a sulfo, carboxyl, hydroxyl, cyano, sulfato or phosphato group, or represents an alkenyl group of 2 to 4 carbon atoms, and $R^4$ is an alkyl group of 1 to 4 carbon atoms, which can be substituted by a hydroxyl, cyano, sulfo, carboxyl, sulfato or phosphato group, or is an alkenyl group of 2 to 4 carbon atoms or represents an alkyl group of 1 to 4 carbon atoms which is substituted by an N-(β-sulfatoethyl)-carbamoyl, N-methyl-N-(β-sulfatoethyl-)carbamoyl or N,N-di-(β-sulfatoethyl)-carbamoyl group.

4. A compound as claimed in claim 2, wherein $R^1$ is a hydrogen atom, an alkyl group of 1 to 4 carbon atoms, an alkoxy group of 1 to 4 carbon atoms, a sulfo group, a carboxyl group or a chlorine atom, $R^2$ is a hydrogen atom, a methyl, ethyl, methoxy or ethoxy group or a chlorine atom or an alkanoylamino group of 2 to 5 carbon atoms or a trifluoromethyl, methylsulfonylamino, cyano, N,N-diethylsulfamoyl, N-methyl-N-(β-sulfatoethyl-)sulfamoyl, N-(β-sulfatoethyl)-sulfamoyl, ureido or N-phenylureido group, $R^3$ denotes a hydrogen atom or an alkyl group of 1 to 4 carbon atoms, which can be substituted by a sulfo, carboxyl, hydroxyl, cyano or sulfato group, and $R^4$ is an alkyl group of 1 to 4 carbon atoms, which can be substituted by 1 or 2 substituents, preferably one substituent, from the group consisting of sulfo, sulfato and hydroxyl, or is a propenyl group or a β-(N-β-sulfatoethylcarbamoyl)-ethyl, β-(N-methyl-N-β-sulfatoethylcarbamoyl)-ethyl or β-[N,N-di-(β-sulfatoethyl)-carbamoyl]-ethyl group.

5. A compound as claimed in claim 1 conforming to the formula (5)

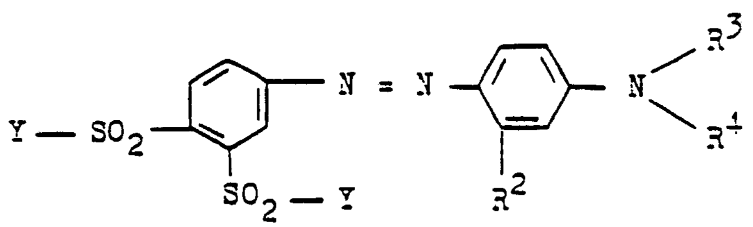

(5)

in which Y, $R^1$, $R^2$, $R^3$ and $R^4$ are as defined in claim 1.

6. A compound as claimed in claim 5, wherein $R^2$, $R^3$ and $R^4$ are as defined in claim 3.

7. A compound as claimed in claim 5, wherein $R^2$, $R^3$ and $R^4$ are as defined in claim 4.

8. A compound as claimed in claim 5, wherein $R^2$ stands for a chlorine atom or a trifluoromethyl group and both the Y radicals and $R^3$ and $R^4$ each represent a β-sulfatoethyl group.

9. A compound as claimed in at least one of claims 1 to 8, wherein both the Y radicals represent a β-sulfatoethyl group.

10. A process for preparing an azo compound of the formula (1) mentioned and defined in claim 1, which comprises diazotizing a compound of the formula (6)

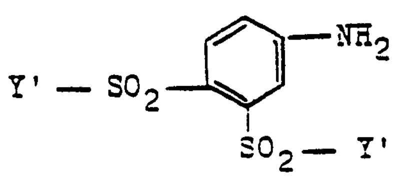

(6)

in which

Y' has one of the meanings mentioned for Y or represents a β-hydroxyethyl group, and coupling with a coupling component of the formula (7)

H - K (7)

in which K has the meaning mentioned in claim 1, and if the starting material used is a diazo component of the formula (6) in which Y' stands for a β-hydroxyethyl group reacting the resultant azo compound of the formula (8)

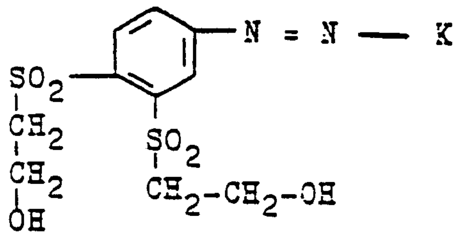

(8)

in which K has the meaning mentioned in claim 1, with an acylating or esterifying agent for conversion into an azo compound of the formula (1) in which X stands for an acyloxy radical which is eliminable under alkaline conditions.

11. A process for preparing a compound of the formula (1) mentioned and defined in claim 1, in which the radical K contains one or more sulfato or phosphato groups bonded to one or more aliphatic group(s) and if desired either or both of the Y radicals represent a β-sulfatoethyl or phosphatoethyl group, which comprises reacting an azo compound conforming to the formula (1) which contains one or more hydroxyl group(s) bonded to one or more aliphatic group(s) in the radical K and optionally β-hydroxyethylsulfhonyl groups as the $-SO_2-Y$ radical, with a sulfating or phosphating agent.

12. Use of a compound of claim 1 or of a compound of the formula (1) prepared as claimed in claim 10 or 11 as a dye, preferably for dyeing or printing hydroxyl- and/or carboxamido-containing material, in particular fiber material.

13. A process for dyeing (including printing) of hydroxyl- and/or carboxamido-containing material, in particular fiber material, by applying or incorporating a dye to or into the material and fixing it by means of heat and/or by means of an acid-binding agent, which comprises using as the dye a compound of the formula (1) mentioned and defined in claim 1.

**Revendications**

1. Composés monoazoïques de formule générale (1) ci-dessous :

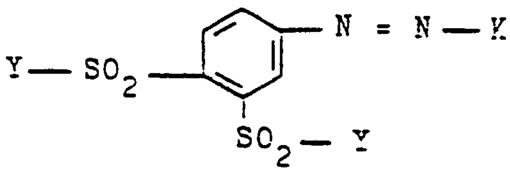

(1)

dans laquelle K désigne un radical de formule (2) ou (3):

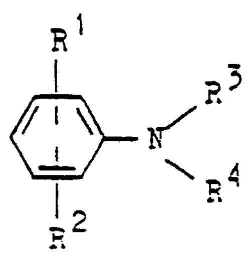

(2)

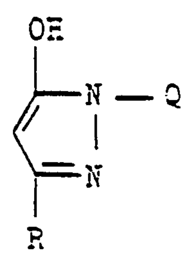

(3)

Y le groupe vinyle ou un groupe de formule (4):

$CH_2-CH_2-X$ (4)

X étant un substituant éliminable par un alcali avec formation du groupe vinyle;

$R^1$ est un atome d'hydrogène, un alkyle ou un alcoxy en $C_1$ à $C_4$, un groupe sulfo $-SO_3M$, M étant un atome d'hydrogène ou de métal alcalin ou l'équivalent d'un métal alcalino-terreux, un groupe carboxy -COOM, M ayant la signification donnée ci-dessus, ou un atome d'halogène:

$R^2$ est un atome d'hydrogène, un alkyle ou un alcoxy en $C_1$ à $C_4$, un atome d'halogène, le groupe cyano ou trifluorométhyle, un alcanoylamino en $C_2$ à $C_5$ ou un alkylsulfonylamino en $C_1$ à $C_4$, ou bien

$R^2$ est le groupe sulfamoyle dont l'atome d'azote peut avoir un ou deux substituants pris parmi des alkyles en $C_1$ à $C_4$ éventuellement substitués, des cycloalkyles et le groupe phényle éventuellement substitué, ou encore

$R^2$ est un groupe uréido dont l'atome d'azote terminal peut avoir un ou deux substituants pris parmi des alkyles en $C_1$ à $C_4$ éventuellement substitués, des cycloalkyles et le groupe phényle éventuellement substitué;

$R^3$ est un atome d'hydrogène ou un alkyle en $C_1$ à $C_6$, de préférence en $C_1$ à $C_4$, pouvant avoir un ou deux substituants pris parmi des alcoxy en $C_1$ à $C_4$, les halogènes, les groupes cyano, hydroxy, carboxy, sulfo, sulfato $-OSO_3M$, M ayant la signification précédemment donnée, phosphato, $-OPO_3M$, M ayant la signification donnée, carbamoyle, sulfamoyle, N-($C_1$-$C_4$-alkyl)-carbamoyles avec sur l'alkyle un groupe sulfato, phosphato, hydroxy ou sulfo, N-($C_1$-$C_4$-alkyl)-sulfamoyles avec sur l'alkyle un groupe sulfato, phosphato, hydroxy ou sulfo, N,N-di-($C_1$-$C_4$-alkyl)-sulfamoyles avec sur l'un des alkyles ou sur les deux un groupe sulfato, phosphato, hydroxy ou sulfo, et N,N-di-($C_1$-$C_4$-alkyl)-carbamoyles avec sur l'un des alkyles ou sur les deux un groupe sulfato, phosphato, hydroxy ou sulfo, ou bien

$R^3$ est un alcényle en $C_2$ à $C_5$;

$R^4$ est un alkyle en $C_1$ à $C_6$, de préférence en $C_1$ à $C_4$, pouvant avoir un ou deux substituant pris parmi des alcoxy en $C_1$ à $C_4$, des halogènes, les groupes cyano, hydroxy, carboxy, sulfo, sulfato, phosphato, carbamoyle, sulfamoyle, N-($C_1$-$C_4$-alkyl)-carbamoyles avec sur l'alkyle un groupe sulfato, phosphato, hydroxy ou sulfo, N-($C_1$-$C_4$-alkyl)-sulfamoyles avec sur l'alkyle un groupe sulfato, phosphato, hydroxy ou sulfo, N,N-di-($C_1$-$C_4$-alkyl)-sulfamoyles avec sur l'un des alkyles ou sur les deux un groupe sulfato, phosphato, hydroxy ou sulfo, et N,N-di-($C_1$-$C_4$-alkyl)-carbamoyles avec sur l'un des alkyles ou sur les deux un groupe sulfato, phosphato, hydroxy ou sulfo, ou bien $R^4$ est un alcényle en $C_2$ à $C_4$;

R est le groupe méthyle ou carboxy, un groupe alcoxycarbonyle en $C_2$ à $C_5$, le groupe carbamoyle ou un radical phényle éventuellement substitué par un groupe sulfo, carboxyl, méthyle, éthyle, méthoxy, éthoxy et/ou un atome de chlore; et

Q est le radical phényle pouvant avoir des substituants ou un radical naphtyle pouvant être substitué par 1, 2 ou 3 groupes sulfo et le cas échéant par un alkyle en $C_1$ à $C_4$, un alcoxy en $C_1$ à $C_4$, un atome de chlore ou un groupe alcanoylamino.

2. Composé selon la revendication 1 caractérisé en ce que K est un radical de formule (2).

3. Composé selon la revendication 2 caractérisé en ce que $R^1$ est un atome d'hydrogène, un alkyle ou un alcoxy en $C_1$ à $C_4$, un groupe sulfo ou carboxy du un atome de chlore, $R^2$ est un atome d'hydrogène, le groupe méthyle, éthyle, méthoxy ou éthoxy ou un atome de chlore, un alcanoylamino en $C_2$ à $C_5$ ou le groupe méthylsulfonylamino, trifluorométhyle, cyano, N,N-diéthyl-sulfamoyle, N,N-di-nbutyl-sulfamoyle, N-méthyl-N-(β-sulfatoéthyl)-sulfameoyle, N-(β-sulfoéthyl)-sulfamoyle, N-phényl-sulfamoyle, uréido ou N-phényl-uréido, $R^3$ est un atome d'hydrogène ou un alkyle en $C_1$ à $C_4$ pouvant porter un groupe sulfo, carboxy, hydroxy, cyano, sulfato ou phosphato, ou un alcényle en $C_2$ à $C_4$ et $R^4$ est un alkyle en $C_1$ à $C_4$ pouvant porter un groupe hydroxy, cyano, sulfo, carboxy, sulfato ou phosphato, ou un alcényle en $C_2$ à $C_4$, ou encore un alkyle en $C_1$ à $C_4$ pouvant avoir comme substituant un groupe N-(β-sulfatoéthyl)-carbamoyle, N-méthyl-N-(β-sulfatoéthyl)-carbamoyle ou N,N-di-(β-sulfatoéthyl)-carbamoyle.

4. Composé selon la revendication 2 caractérisé en ce que $R^1$ est un atome d'hydrogène, un alkyle en $C_1$ à $C_4$ ou un alcoxy en $C_1$ à $C_4$, un groupe sulfo ou carboxy ou un atome de chlore, $R_2$ est un atome d'hydrogène, le groupe méthyle, éthyle, méthoxy ou éthoxy ou un atome de chlore ou un alcanoylamino en $C_2$ à $C_5$, le groupe trifluorométhyle, méthylsulfonylamino, cyano, N,N-diéthyl-sulfamoyle, N-méthyl-N-(β-sulfatoéthyl)-sulfamoyle, N-(β-sulfatoethyl)-sulfamoyle, uréido ou N-phényl-uréido, $R^3$ est un atome d'hydrogène ou un alkyle en $C_1$ à $C_4$ qui peut avoir un groupe sulfo, carboxy, hydroxy, cyano ou sulfato, et $R^4$ un alkyle en $C_1$ à $C_4$ pouvant avoir un ou deux substituants, de préférence un seul, pris parmi les groupes sulfo, sulfato et hydroxy, ou bien un groupe propényle ou un groupe β-(N-β-sulfatoéthyl-carbamoyl)-éthyle, β-(N-méthyl-N-β-sulfatoéthyl-carbamoyl)-éthyle ou β-[N,N-di-(β-sulfatoéthyl)-carbamoyl]-éthyle.

5. Composé selon la revendication 1 de formule générale (5):

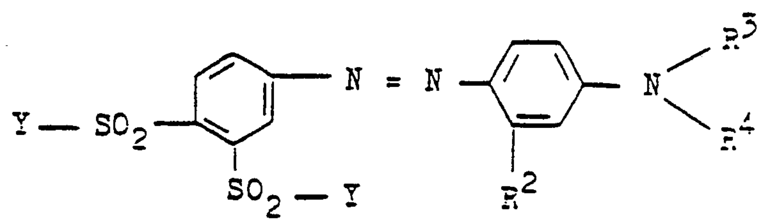

(5)

les divers symboles ayant les significations données à la revendication 1.

6. Composé selon la revendication 5 caractérisé en ce que $R^2$, $R^3$ et $R^4$ ont les significations qui ont été

indiquées à la revendication 3.

7. Composé selon la revendication 5 caractérisé en ce que $R^2$, $R^3$ et $R^4$ ont les significations qui ont été indiquées à la revendication 4.

8. Composé selon la revendication 5 caractérisé en ce que $R^2$ est un atome de chlore ou le groupe trifluorométhyle et les deux Y, ainsi que $R^3$ et $R^4$, sont chacun un groupe β-sulfatoéthyle.

9. Composé selon une ou plusieurs des revendications 1 à 8, caractérisé en ce que les deux Y sont chacun un groupe β-sulfatoéthyle.

10. Procédé de préparation des composés azoïques de formule (1) définis à la revendication 1, procédé caractérisé en ce que l'on diazote un composé de formule (6):

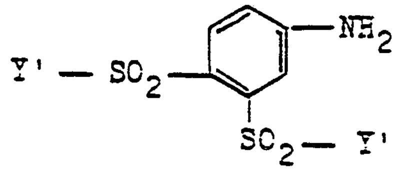

(6)

Y' ayant l'une des significations données pour Y ou bien étant le groupe β-hydroxyéthyle, et on copule le composé de diazonium formé avec une composante ce copulation de formule (7):

H - K (7)

et si l'on a employé une composante de diazotation de formule (6) dans laquelle Y' est le groupe β-hydroxyéthyle, on fait réagir le composé azoïque formé de formule (8):

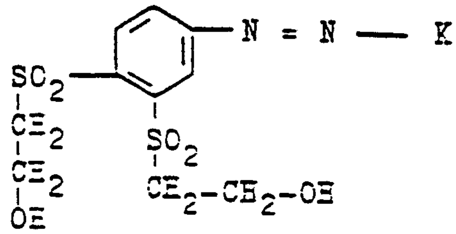

(8)

avec un agent d'acylation (d'estérification) pour le transformer en un composé azoïque de formule (1) dans lequel X est un radical acyloxy éliminable par un alcali.

11. Procédé de préparation de composés de formule générale (1) définie à la revendication 1 dans lesquels le radical K comporte un ou plusieurs groupes sulfato ou phosphato liés à un ou plusieurs groupes aliphatiques et le cas échéant l'un des Y ou les deux sont le groupe β-sulfatoéthyle ou phosphatoéthyle, procédé caractérisé en ce que l'on fait réagir avec un agent de sulfatation ou de phosphatation un composé azoïque de formule (1) comportant un ou plusieurs hydroxyles liés à un ou plusieurs groupes aliphatiques dans le radical K et le cas échéant des groupes β-hydroxyéthylsulfonyles comme radicaux $-SO_2-Y$.

12. Emploi comme colorants des composés selon la revendication 1 ou d'un composé de formule (1) qui a été préparé selon la revendication 10 ou 11, de préférence pour teindre ou imprimer des matières ayant des groupes hydroxyliques et/ou carboxamides, et notamment des matières fibreuses.

13. Procédé de teinture (y compris l'impression) de matières à groupes hydroxyliques et/ou carboxamides, notamment de matières fibreuses, dans lequel on applique un colorant sur la matière ou à coeur dans celle-ci et on l'y fixe sous l'action de la chaleur et/ou d'un agent liant les acides, procédé caractérisé en ce que l'on utilise comme colorant un composé de formule générale (1) définie à la revendication 1.